# EUROPÄISCHE PATENTANMELDUNG

(11) **EP 4 446 087 A1**
(43) Veröffentlichungstag der Anmeldung: **16.10.2024**
(21) Anmeldenummer: 24166251.9
(22) Anmeldetag: 26.03.2024
(51) Int. Cl.: B29C 45/17, B29C 45/33, B29C 45/34, B29C 45/80, B29C 33/72, B29K 105/00

(54) **SPRITZGIESSWERKZEUG, REINIGUNGVERFAHREN FÜR EIN SPRITZGIESSWERKZEUG UND SPRITZGIESSVERFAHREN**

(30) Priorität: 14.04.2023 DE 102023109494
(71) Anmelder: MHT Mold & Hotrunner Technology AG, 65239 Hochheim (DE)
(72) Erfinder: Wagner, Christian, 55126 Mainz (DE); Süß, Peter, 64409 Messel (DE); Gebauer, Thomas, 66709 Weiskirchen Saar (DE); Tilsner, Christian, 64331 Weiterstadt (DE)
(74) Vertreter: WSL Patentanwälte Partnerschaft mbB

(57) **Zusammenfassung**

Die vorliegende Erfindung betrifft ein Spritzgießwerkzeug bzw. ein Spritzgießverfahren zur Herstellung zumindest eines Formteils in einem Formraum, wobei das Spritzgießwerkzeug zumindest zwei Werkzeugelemente aufweist, die relativ zueinander zwischen einer offenen Position und einer geschlossenen Position bewegbar sind, wobei in der geschlossenen Position von den zumindest zwei Werkzeugelementen der Formraum zumindest abschnittsweise umschlossen wird und wobei in der offenen Position ein in dem Formraum hergestelltes Formteil aus dem Spritzgießwerkzeug entnommen werden kann. Um eine Reinigung des Spritzgießwerkzeuges zu ermöglichen, ist eine Reinigungsposition vorgesehen, die zwischen der offenen Position und der geschlossenen Position liegt und in welcher ein Abstandselement zwischen den Werkzeugelementen angeordnet ist.

## Beschreibung

Die vorliegende Erfindung betrifft ein Spritzgießwerkzeug zur Herstellung zumindest eines Formteils in einem Formraum, wobei das Spritzgießwerkzeug zumindest zwei Werkzeugelemente aufweist, die relativ zueinander zwischen einer offenen Position und einer geschlossenen Position bewegbar sind, wobei in der geschlossenen Position von den zumindest zwei Werkzeugelementen der Formraum zumindest abschnittsweise umschlossen wird und wobei in der offenen Position ein in dem Formraum hergestelltes Formteil aus dem Spritzgießwerkzeug entnommen werden kann.

Die vorliegende Erfindung betrifft darüber hinaus ein Reinigungsverfahren für ein Spritzgießwerkzeug der eingangs genannten Art sowie ein Spritzgießverfahren zur Herstellung eines Formteils mit einem Spritzgießwerkzeug der eingangs genannten Art.

Das Spritzgießen ist eines der wichtigsten Verfahren zur Herstellung von Kunststoffformteilen. Dabei wird die im Allgemeinen ursprünglich als Pulver oder Granulat vorliegende Formmasse erhitzt, plastifiziert und als plastifizierte Schmelze unter hohem Druck in einen Formraum eines entsprechenden Formwerkzeuges gedrückt. Die Formmasse erstarrt in dem Formwerkzeug und wird anschließend dem geöffneten Werkzeug als Formteil entnommen. Bei dem Formteil kann es sich um ein fertiges Formteil oder einen Vorformling handeln, der anschließend in weiteren Prozessschritten nachbearbeitet wird. Beispielsweise werden handelsübliche PET-Flaschen durch Streckblasformen eines Hohlkörpervorformlings hergestellt.

Zur Herstellung eines Formteils weist ein Spritzgießwerkzeug typischerweise eine Kavitätenplatte mit zumindest einer Kavität und eine Kernplatte mit zumindest einem Kern auf, wobei die Kavitätenplatte und die Kernplatte derart relativ zueinander bewegbar sind, dass sie zwischen einer offenen Position und einer geschlossenen Position hin und her bewegt werden können. In der geschlossenen Position ist der Kern in der Kavität angeordnet, sodass ein Formraum gebildet wird, in welchen die plastifizierte Schmelze eingeleitet wird. Eine Innenkontur der Kavität entspricht damit zumindest abschnittsweise der Außenkontur des herzustellen Formteils, während eine Außenkontur des Kerns zumindest abschnittsweise der Innenkontur des herzustellenden Formteils entspricht. In der offenen Position ist der Kern hingegen nicht in der Kavität angeordnet, sodass das erstarrte Formteil aus dem Spritzgießwerkzeug entnommen werden kann.

Des Weiteren weist ein typisches Spritzgießwerkzeug einen Halsring auf, der einer exakten Anordnung des Kerns in der Kavität während der geschlossenen Position dient und den Formraum abschließt. Dabei wird der Halsring zwischen der Kavitätenplatte und der Kernplatte so angeordnet, dass er die Anordnung aus Kavität und Kern ergänzt. Die Innenkontur des Halsrings entspricht dabei einem Abschnitt der Außenkontur des herzustellenden Formteils und bildet damit ebenfalls einen Teil des Formraums für die plastifizierte Schmelze.

Bei dem Abschnitt des Formteils kann es sich weiter beispielsweise um einen Gewindeabschnitt eines Formteils handeln, der aufgrund von Hinterschneidungen nur entformt werden kann, wenn das hierfür formgebende Werkzeug, also der Halsring, mehrteilig ausgestaltet ist. Dazu besteht der Halsring typischerweise aus zwei sogenannten Halsbacken, die in der geschlossenen Position miteinander in Kontakt stehen und den Formraum abschließen. In der offenen Position des Spritzgießwerkzeuges können die Halsbacken hingegen auseinander bewegt werden, sodass das hergestellte Formteil entnommen werden kann.

Zur Herstellung eines Formteils werden daher zunächst die Halsbacken des Halsrings miteinander in Kontakt gebracht und anschließend der Kern in der Kavität angeordnet, sodass ein geschlossener Formraum entsteht, der dem Einspritzdruck der plastifizierten Schmelze standhält. Bei dieser Anordnung handelt es sich um eine geschlossene Position des Spritzgießwerkzeuges im Sinne der vorliegenden Erfindung. Ist die Schmelze ausreichend erstarrt, werden die Halsbacken wieder auseinander und der Kern aus der Kavität bewegt, sodass das Formteil entnommen werden kann. Bei dieser Anordnung handelt es sich um eine offene Position des Spritzgießwerkzeuges im Sinne der vorliegenden Erfindung.

Die genannten Prozessschritte, die einen Herstellungszyklus eines Formteils beschreiben, werden typischerweise innerhalb weniger Sekunden durchgeführt, sodass ein Herstellungszyklus innerhalb kürzester Zeit vielfach wiederholt wird. Während jedem Herstellungszyklus kann es vorkommen, dass kleine Partikel der Formmasse in dem Werkzeug, insbesondere in Spalten zwischen den Werkzeugelementen des Werkzeuges, die nicht unmittelbar mit der Schmelze in Kontakt kommen, verbleiben und sich diese mit der Zeit zusetzen.

Ein solcher Spalt befindet sich insbesondere zwischen dem Halsring und der Kavitäten- oder Kernplatte oder zwischen den Halsbacken des Halsrings und ist so ausgestaltet, dass er in der geschlossenen Position des Werkzeuges zwar keine Schmelze aus dem Formraum entweichen lässt, allerdings der Entlüftung des Formraums dient. Ein Zusetzen dieses Spaltes führt also dazu, dass mittel- oder langfristig keine Luft mehr aus dem Formraum entweichen kann und der Spritzgießvorgang beeinträchtigt wird.

Daher ist eine Reinigung des Spritzgießwerkzeuges, insbesondere der Spalten zwischen den Werkzeugelementen erforderlich. Eine manuelle Reinigung ist jedoch umständlich und führt zu hohen Ausfallzeiten des Spritzgießwerkzeuges.

Aus dem Stand der Technik ist bereits bekannt, die Herstellungszyklen eines Spritzgießverfahrens mit Reinigungszyklen abzuwechseln, in welchen die Halsbacken des Halsrings in einer Reinigungsposition angeordnet werden. In der Reinigungsposition ist ein Spalt zwischen den Halsbacken vorhanden, der größer als ein Spalt in der geschlossenen Position ist, jedoch kleiner als ein Spalt in der offenen Position, sodass in der Reinigungsposition Schmelze auch in den Spalt zwischen den Halsbacken eindringen kann. Mit anderen Worten wird der Formraum gezielt erweitert, d.h. überspritzt, sodass etwaige Partikelreste, die sich in dem Spalt zwischen den Halsbacken angesammelt haben, mit der plastifizierten Schmelze in Kontakt kommen und zusammen mit dem so entstehenden Formteil aus dem Werkzeug entfernt werden. Das Formteil, welches in dem Reinigungszyklus hergestellt wurde, wird anschließend verworfen. Die Prozessschritte an sich müssen jedoch nicht längerfristig unterbrochen werden, da die Reinigungszyklen, abgesehen von dem grö-ßeren Spalt in der Reinigungsposition im Vergleich zur geschlossenen Position, analog zu den Herstellungszyklen verlaufen. Eine manuelle Reinigung ist nicht erforderlich.

Das Anordnen der Halsbacken in der Reinigungsposition erfolgt gemäß dem Stand der Technik dadurch, dass eine Schließkraft, mit welcher die Halsbacken in der geschlossenen Position aufeinandergedrückt werden, für die Reinigungsposition verringert wird, sodass aufgrund des Einspritzdrucks der plastifizierten Schmelze die Halsbacken geringfügig auseinander gedrückt werden und die Schmelze zwischen diese eindringen kann. Die Variation der Schließkraft, sodass Schmelze zwischen die Halsbacken eindringen kann, ist jedoch prozesstechnisch aufwendig zu realisieren und führt schneller zu Schäden am Werkzeug. Zudem muss mit einem separaten Dichtelement sichergestellt werden, dass keine Schmelze aus dem Spalt zwischen den Halsbacken ausdringen kann.

Für die Reinigung des Spaltes zwischen Halsring und Kavität oder Kern existiert im Stand der Technik außer den beschriebenen Varianten ebenfalls keine Lösung.

Der vorliegenden Erfindung liegt daher die Aufgabe zugrunde, ein Spritzgießwerkzeug mit einer Reinigungsfunktion bzw. ein Reinigungsverfahren für ein Spritzgießwerkzeug bereitzustellen, bei welchen eine automatisierte Reinigung ohne aufwendige Prozesssteuerungen erfolgt.

Die Aufgabe wird gelöst durch ein Spritzgießwerkzeug der eingangs genannten Art, wobei das Spritzgießwerkzeug zumindest ein Abstandselement aufweist, welches derart in dem Spritzgießwerkzeug anordenbar ist, dass eine Bewegung der zumindest zwei Werkzeugelemente von der offenen Position in Richtung der geschlossenen Position nur bis zu einer Reinigungsposition, die zwischen der offenen Position und der geschlossenen Position liegt, durch das Abstandselement zugelassen wird und eine weitere Bewegung der zumindest zwei Werkzeugelemente in Richtung der geschlossenen Position durch das Abstandselement verhindert wird, wobei in der Reinigungsposition die zumindest zwei Werkzeugelemente und das Abstandselement zumindest einen Abschnitt eines erweiterten Formraums zur Aufnahme einer plastifizierten Schmelze bilden.

Erfindungsgemäß wird also ein weiteres Aufeinanderzubewegen der Werkzeugelemente in die geschlossene Position über die Reinigungsposition hinaus durch ein Abstandselement blockiert, sodass ein erweiterter Formraum entsteht, der gegenüber dem Formraum in der geschlossenen Position ein größeres Volumen aufweist und Bereiche erfasst, die während der normalen Herstellungszyklen nicht mit Schmelze in Kontakt kommen. Dabei ist das Abstandselement derart in dem Spritzgießwerkzeug beweglich anordenbar, dass es einerseits in der Reinigungsposition eine Blockade der Bewegung der Werkzeugelemente bewirken kann, wenn das Spritzgießwerkzeug in einem Reinigungszyklus gereinigt werden soll, andererseits die Bewegung der Werkzeugelemente jedoch nicht behindert, wenn diese in die geschlossene oder offene Position bewegt werden sollen, um ein Formteil in einem Herstellungszyklus herzustellen. Im einfachsten Fall wird das Abstandselement daher beispielsweise manuell in dem Spritzgießwerkzeug angeordnet, wenn eine Reinigung erforderlich ist.

Bei dem erfindungsgemäßen Spritzgießwerkzeug ist allerdings keine besondere Prozesssteuerung der Werkzeugelemente erforderlich.

Das Abstandselement hat sowohl eine Blockierfunktion im Hinblick auf die Bewegung der Werkzeugelemente als auch eine Dichtfunktion zum Abdichten des Formraums.

Das Abstandselement ist in einer Ausführungsform in der Reinigungsposition direkt in einem Spalt zwischen den Werkzeugelementen angeordnet und/oder das Abstandselement weist ein Dichtelement auf, welches in der Reinigungsposition in oder an einem Spalt zwischen den Werkzeugelementen angeordnet ist, um den Formraum abzudichten. Es versteht sich jedoch, dass das Abstandselement nicht zwangsläufig in Kontakt mit der plastifizierten Schmelze kommen muss. Ob das Abstandselement bzw. das Dichtelement des Abstandselementes in Kontakt mit der plastifizierten Schmelze kommen, hängt davon ab, wie viel Schmelze in den erweiterten Formraum eingeleitet wird.

Wenn nur ein Dichtelement des Abstandselementes in oder an dem Spalt zwischen den Werkzeugelementen angeordnet ist, ist ein Blockierelement des Abstandelementes in einem Bereich des Werkzeuges angeordnet, in welchem ein weiteres Aufeinanderzubewegen der Werkzeugelemente verhindert werden kann. Dabei kann es sich beispielsweise um einen Antrieb handeln, welcher die Bewegung der Werkzeugelemente antreibt. Zu einem Antrieb der Halsbacken werden z.B. sogenannte Schieberleisten gezählt, mit welchen die Halsbacken derart verbunden sind, dass die Halsbacken durch eine Bewegung der Schieberleisten bewegt werden. Das Blockierelement des Abstandselementes kann daher in einer Ausführungsform auch derart zwischen den Schieberleisten angeordnet sein, dass eine Bewegung der Schieberleisten ab einem bestimmten Punkt, der mit der Reinigungsposition der Halsbacken korrespondiert, blockiert wird.

Vorzugsweise ist das Abstandselement jedoch sowohl Dichtelement als auch Blockierelement in einem und ist direkt in dem Spalt zwischen den Werkzeugelementen so angeordnet, dass es mit beiden Werkzeugelementen in Kontakt steht.

In einer Ausführungsform weist das Spritzgießwerkzeug als Werkzeugelemente eine Kavitätenplatte mit zumindest einer Kavität, eine Kernplatte mit zumindest einem Kern und zumindest einen Halsring auf, wobei der Halsring auf einer Werkzeugachse betrachtet zwischen der Kavitätenplatte und der Kernplatte angeordnet ist, wobei die Kavitätenplatte, die Kernplatte und der Halsring derart zueinander beweglich sind, dass in der offenen Position der Kern nicht in der Kavität angeordnet ist, sodass das Formteil entnommen werden kann, in der geschlossenen Position der Kern in der Kavität angeordnet ist, sodass der Formraum von der Kavität, dem Kern und dem Halsring gebildet wird und in der Reinigungsposition der Kern zumindest teilweise in der Kavität angeordnet ist, sodass der erweiterte Formraum von der Kavität, dem Kern, dem Halsring und dem Abstandselement gebildet wird.

Es versteht sich, dass das Abstandselement grundsätzlich zwischen allen Werkzeugelementen in der Reinigungsposition angeordnet werden kann, je nachdem wo eine Reinigung erforderlich ist.

In einer Ausführungsform erfolgt das Anordnen des Abstandselements zwischen den Werkzeugelementen manuell. Alternativ kann das Abstandselement auch durch entsprechende Greifer oder ähnliches zwischen den Werkzeugelementen automatisiert angeordnet werden.

In einer anderen Ausführungsform ist das Abstandselement derart mit der Kavitätenplatte oder der Kernplatte verbunden und ansteuerbar, dass sich das Abstandselement in der Reinigungsposition im Wesentlichen senkrecht von einer Oberfläche der Kavitätenplatte oder der Kernplatte aus in Richtung der Werkzeugachse bis zu dem Halsring oder zwischen Halsbacken des Halsrings erstreckt, wobei die Kavitätenplatte oder die Kernplatte vorzugsweise eine Ausnehmung aufweist, in welcher das Abstandselement in der geschlossenen Position des Spritzgießwerkzeuges vollständig aufgenommen ist.

Mit anderen Worten wird das Abstandselement durch eine Bewegung der Kavitätenplatte oder der Kernplatte in der Reinigungsposition automatisch zwischen den Werkzeugelementen, beispielsweise zwischen der Kavitäten- oder Kernplatte einerseits und dem Halsring andererseits und/oder zwischen Halsbacken des Halsrings, angeordnet. Eine manuelle Anordnung des Abstandselementes entfällt. Zudem ist das Abstandselement derart mit der Kavitäten- oder Kernplatte verbunden, dass es so angesteuert werden kann, dass es in der geschlossenen Position nicht zwischen den Werkzeugelementen angeordnet ist.

Insbesondere können die Kavitätenplatte oder die Kernplatte weiter einen Antrieb aufweisen, mit welchem das Abstandselement in der offenen Position aus der Ausnehmung der Kavitätenplatte oder der Kernplatte bewegbar ist, sodass das Abstandselement in der Reinigungsposition zwischen den Werkzeugelementen angeordnet ist. Beispielsweise kann das Abstandselement als Stift ausgebildet sein, der in der Ausnehmung der Kavitätenplatte oder der Kernplatte versenkbar ist, um einen Kontakt zwischen den Werkzeugelemente in der geschlossenen Position nicht zu behindern.

In einer weiteren Ausführungsform ist der Halsring eines der zumindest zwei Werkzeugelemente und die Kavitätenplatte mit der Kavität oder die Kernplatte mit dem Kern ein anderes der zumindest zwei Werkzeugelemente, sodass in der Reinigungsposition durch das Abstandselement ein Spalt zwischen dem Halsring einerseits und der Kavität oder dem Kern andererseits gebildet wird, wobei vorzugsweise das Abstandselement eine Öffnung zum Durchführen des Kerns aufweist.

In einer weiteren Ausführungsform weist der Halsring zwei Halsbacken auf, wobei eine der Halsbacken eines der zumindest zwei Werkzeugelemente ist und die zweite Halsbacke ein anderes der zumindest zwei Werkzeugelemente ist, sodass in der Reinigungsposition durch das Abstandselement ein Spalt zwischen den zwei Halsbacken des Halsrings gebildet wird.

Es versteht sich, dass auch eine Kombination der beiden zuletzt beschriebenen Ausführungsformen möglich ist, sodass also ein Spalt zwischen dem Halsring einerseits und der Kavitäten- oder Kernplatte andererseits und ein Spalt zwischen den Halsbacken des Halsrings durch das Abstandselement gebildet wird. So können alle verschmutzen Bereiche in einem Reinigungszyklus gereinigt werden.

Insbesondere ist in einer Ausführungsform das Abstandselement dann derart ausgebildet, dass ein erster Abschnitt des Abstandselementes in der Reinigungsposition in einem Spalt zwischen dem Halsring einerseits und der Kavität oder dem Kern andererseits angeordnet ist und ein zweiter Abschnitt des Abstandselementes in einem Spalt zwischen den Halsbacken des Halsrings, wobei vorzugsweise der erste und zweite Abschnitt des Abstandselementes einstückig ausgestaltet sind, wobei besonders bevorzugt das Abstandselement ein Stift oder ein Stanzbiegeteil ist, wobei, wenn das Abstandselement ein Stanzbiegeteil ist, der zweite Abschnitt durch Umbiegen aus dem ersten Abschnitt hergestellt ist.

Auch die im Zusammenhang mit einer anderen Ausführungsform beschriebenen Öffnungen in dem Abstandselement zur Durchführung des Kerns können besonders leicht in einem Stanzverfahren hergestellt werden. So kann das Abstandselement insgesamt kostengünstig hergestellt werden, sodass im Vergleich zu prozesstechnisch aufwendigen Lösungen Kosten eingespart werden.

Unter einem Abstandselement in Form eines Stiftes wird ein Bauteil verstanden, welches im Vergleich zu seinem Querschnitt eine große Länge aufweist, beispielsweise ein länglicher Zylinder oder ein Quader. Bei dieser Ausführungsform kann der Stift entweder so angeordnet sein, dass er nur einen Abstand zwischen Halsring einerseits und Kavitäten- oder Kernplatte andererseits erzeugt oder einen Abstand zwischen den Halsbacken des Halsrings, oder der Stift erstreckt sich alternativ sowohl zwischen den Halsbacken des Halsrings als auch zwischen der Kavitäten- und der Kernplatte.

In einer weiteren Ausführungsform ist das Abstandselement derart ausgestaltet, dass in der Reinigungsposition ein erstes Abstandselement oder ein erster Abschnitt des Abstandselementes in einem ersten Endabschnitt des Spaltes zwischen den Halsbacken angeordnet ist und ein zweites Abstandselement oder ein zweiter Abschnitt des Abstandselementes in einem zweiten Endabschnitt des Spaltes angeordnet ist, der dem ersten Endabschnitt gegenüberliegt. Durch die gleichmäßige Verteilung der Abstandselemente in dem Spalt wird die Schließkraft gleichmäßig übertragen, sodass ein Spalt mit einem konstanten Spaltmaß ausgebildet wird.

In einer weiteren Ausführungsform weist die Kavitätenplatte eine Mehrzahl von Kavitäten und die Kernplatte eine Mehrzahl von Kernen auf, wobei das Spritzgießwerkzeug weiter eine Mehrzahl von Halsringen aufweist, wobei jeweils ein Halsring einer Kavität und einem Kern zugeordnet ist, wobei das Abstandselement derart ausgestaltet und anordenbar ist, dass es sich in der Reinigungsposition über zumindest zwei benachbarte Halsringe erstreckt, wobei vorzugsweise das Abstandselement eine Mehrzahl von Öffnungen aufweist, durch welche sich die Kerne der Kernplatte erstrecken.

Sind die Kavitäten und Kerne beispielsweise in Reihen und Spalten angeordnet, so können durch ein Abstandselement alle Halsringe in einer der Reihen oder Spalten abgedeckt werden und die die Halsringe in einer weiteren Reihe oder Spalte durch ein weiteres Abstandselement. Es versteht sich, dass die Anzahl der Öffnungen des Abstandselementes dabei mit der Anzahl an Halsringen bzw. Kernen korrespondiert, die von dem Abstandselement überdeckt werden.

Insbesondere in Kombination mit der Ausführungsform, in welcher durch das Abstandselement sowohl ein Spalt zwischen den Halsbacken des Halsrings als auch zwischen dem Halsring einerseits und der Kavitäten- oder Kernplatte andererseits erzeugt werden soll, bietet die zuvor beschriebene Ausführungsform den Vorteil, dass durch das Anordnen eines Abstandselementes gleichzeitig in mehreren Anordnungen aus Kavität, Kern und Halsbacken entsprechende Spalte zur Reinigung erzeugt werden. Es muss daher beispielsweise nicht zwischen jedem Halsbackenpaar der Halsringe ein Abstandselement in einem separaten Schritt angeordnet werden.

In einer weiteren Ausführungsform weist die Kavitätenplatte ebenfalls eine Mehrzahl von Kavitäten und die Kernplatte eine Mehrzahl von Kernen auf, wobei das Spritzgießwerkzeug weiter eine Mehrzahl von Halsringen mit jeweils zwei Halsbacken aufweist, wobei jeweils zwei Halsbacken eines Halsrings einer Kavität und einem Kern zugeordnet sind, wobei das Abstandselement derart ausgestaltet und anordenbar ist, dass es sich in der Reinigungsposition zwischen jeweils zwei Halsbacken zweier benachbarter Halsringe erstreckt, sodass das Abstandselement in der Reinigungsposition sowohl in Kontakt mit beiden Halsbacken des einen Halsrings als auch in Kontakt mit den beiden Halsbacken des benachbarten Halsrings steht. Mit anderen Worten wird durch ein einteiliges Abstandselement bzw. durch einen einteiliger Abschnitt des Abstandselementes ein für die Reinigung geeigneter Spalt zwischen jeweils zwei Halsbacken benachbarter Halsringe erzeugt, indem ein Abschnitt des Abstandselementes in Kontakt mit den Halsbacken des einen Halsrings steht und ein anderer Abschnitt des Abstandselementes in Kontakt mit den Halsbacken des benachbarten Halsrings.

In einer weiteren Ausführungsform ist das Abstandselement derart ausgebildet, dass es in der Reinigungsposition durch eine Magnetkraft zwischen den Werkzeugelementen gehalten wird. Es versteht sich, dass hierzu das Abstandselement und/oder die Werkzeugelemente entsprechende magnetische Eigenschaften aufweisen. Dadurch wird die Anordnung des Abstandselementes zwischen den Werkzeugelementen vereinfacht.

In einer weiteren Ausführungsform weisen die Werkzeugelemente zumindest eine zu dem Abstandselement korrespondierende Ausnehmung auf, in welcher ein Abschnitt des Abstandselementes in der Reinigungsposition angeordnet ist. Dadurch wird die Dichteigenschaft des Abstandselementes verbessert.

Die der Erfindung zugrundeliegende Aufgabe wird weiter durch ein Reinigungsverfahren für ein Spritzgießwerkzeug gelöst, wobei das Verfahren die folgenden Schritte aufweist:
a. Bereitstellen eines Spritzgießwerkzeuges nach einem der Ansprüche 1 bis 12,
b. Anordnen des Abstandselementes zwischen den zumindest zwei Werkzeugelementen,
c. Bewegen der Werkzeugelemente relativ zueinander in eine Reinigungsposition, sodass die Werkzeugelemente in Kontakt mit dem Abstandselement gebracht werden, wobei eine Bewegung der Werkzeugelemente relativ zueinander über die Reinigungsposition hinaus durch das Abstandselement verhindert wird, wobei die Werkzeugelemente und das Abstandselement zumindest einen Abschnitt eines erweiterten Formraum zur Aufnahme einer plastifizierten Schmelze bilden,
d. Befüllen des erweiterten Formraums mit der plastifizierten Schmelze,
e. Bewegen der Werkzeugelemente in die offene Position, sodass das Formteil aus dem Spritzgießwerkzeug entnommen werden kann.

Das Befüllen des Formraums in Schritt d. erfolgt nicht zwangsläufig so, dass der gesamte erweiterte Formraum mit der Schmelze befüllt wird. D.h. die Schmelze kommt nicht zwangsläufig in Kontakt mit den Abstandselementen. Ob die Schmelze in Kontakt mit den Abstandselementen kommt, hängt davon ab, wie viel Schmelze in den erweiterten Formraum eingeleitet wird.

Die der Erfindung zugrundeliegende Aufgabe wird weiter durch ein Spritzgießverfahren zur Herstellung eines Formteils mit einem Spritzgießwerkzeug nach einer der zuvor beschriebenen Ausführungsformen gelöst, wobei das Spritzgießverfahren zumindest einen Herstellungszyklus und zumindest einen Reinigungszyklus aufweist, die nacheinander ausgeführt werden, wobei der Reinigungszyklus dem zuvor beschriebenen Reinigungsverfahren entspricht, wobei sich der Herstellungszyklus von dem Reinigungszyklus darin unterscheidet, dass kein Abstandselement zwischen den Werkzeugelementen angeordnet wird und die Werkzeugelemente in Schritt c. in der geschlossenen Position miteinander in Kontakt gebracht werden, sodass zumindest ein Abschnitt des Formraum von den zumindest zwei Werkzeugelementen und nicht von dem Abstandselement gebildet wird.

Es versteht sich, dass auch eine Mehrzahl von Herstellungszyklen hintereinander ablaufen kann, bevor ein Reinigungszyklus initiiert wird. Die Anzahl an Herstellungszyklen im Vergleich zu Reinigungszyklen kann beispielsweise an die verwendete Formmasse angepasst werden, sodass eine Reinigung nur erfolgt, wenn diese auch erforderlich ist.

In einer Ausführungsform wird eine Schließkraft, mit welcher die Werkzeugelemente in dem Reinigungszyklus in Kontakt mit dem Abstandselement gebracht werden, gegenüber einer Schließkraft, mit welcher die Werkzeugelemente in dem Herstellungszyklus miteinander in Kontakt gebracht werden, angepasst. Vorzugsweise wird die Schließkraft im Reinigungszyklus im Vergleich zu der Schließkraft im Herstellungszyklus verringert.

Weitere Vorteile, Merkmale und Anwendungsmöglichkeiten der vorliegenden Erfindung werden anhand der folgenden Beschreibung bevorzugter Ausführungsformen deutlich. Gleiche Bauteile sind dabei mit gleichen Bezugszeichen versehen.
- Figur 1: zeigt eine schematische, dreidimensionale Gesamtübersicht einer Ausführungsform des erfindungsgemäßen Spritzgießwerkzeuges.
- Figur 2: zeigt einen schematischen Ausschnitt eines Querschnitts durch die in Figur 1 gezeigte Ausführungsform des erfindungsgemäßen Spritzgießwerkzeuges entlang der Werkzeugachse.
- Figur 3: zeigt eine schematische Darstellung eines Formteils, welches im Reinigungszyklus mit dem erfindungsgemäßen Spritzgießwerkzeug hergestellt wurde.
- Figur 4a: zeigt einen dreidimensionalen Ausschnitt einer schematischen Darstellung der in Figur 1 gezeigten Ausführungsform.
- Figur 4b: zeigt einen dreidimensionalen Ausschnitt einer schematischen Darstellung der in Figur 1 gezeigten Ausführungsform.
- Figur 5a: zeigt eine dreidimensionale Darstellung einer ersten Ausführungsform des Abstandselementes für das erfindungsgemäße Spritzgießwerkzeug.
- Figur 5b: zeigt eine Vergrößerung des in Figur 5a dargestellten Abstandselementes.
- Figur 5c: zeigt das in den Figuren 5a und 5b gezeigte Abstandselement in einem eingebauten Zustand in dem Spritzgießwerkzeug.
- Figur 6a: zeigt eine dreidimensionale Darstellung einer zweiten Ausführungsform eines Abstandselementes für das erfindungsgemäße Spritzgießwerkzeug, die auch in den Figuren 4a und 4b gezeigt ist.
- Figur 6b: zeigt eine Vergrößerung des in Figur 6a dargestellten Abstandselementes.
- Figur 6c: zeigt das in den Figuren 6a und 6b gezeigte Abstandselement in einem eingebauten Zustand in dem Spritzgießwerkzeug.
- Figur 7a: zeigt einen schematischen Ausschnitt einer Halsbacke einer Ausführungsform des erfindungsgemäßen Spritzgießwerkzeuges, in welchem das in den Figuren 5a bis 5c gezeigte Abstandselement eingebaut wird.
- Figur 7b: zeigt einen schematischen Ausschnitt einer Halsbacke einer Ausführungsform des erfindungsgemäßen Spritzgießwerkzeuges, in welchem das in den Figuren 6a bis 6c gezeigte Abstandselement eingebaut wird.
- Figur 8a: zeigt ein Halsbackenpaar in der offenen Position.
- Figur 8b: zeigt ein Halsbackenpaar in der geschlossenen Position.
- Figur 8c: zeigt ein Halsbackenpaar in der Reinigungsposition gemäß der in den Figuren 5a bis 5c gezeigten Ausführungsform.
- Figur 8d: zeigt ein Halsbackenpaar in der Reinigungsposition gemäß einer dritten Ausführungsform des erfindungsgemäßen Spritzgießwerkzeuges.
- Figur 9: zeigt einen schematischen Aufbau einer vierten Ausführungsform des erfindungsgemäßen Spritzgießwerkzeuges.
- Figur 10a: zeigt einen schematischen Aufbau einer fünften Ausführungsform des erfindungsgemäßen Spritzgießwerkzeuges.
- Figur 10b: zeigt einen Ausschnitt eines Querschnitts der in Figur 10a gezeigten Ausführungsform entlang der Werkzeugachse.

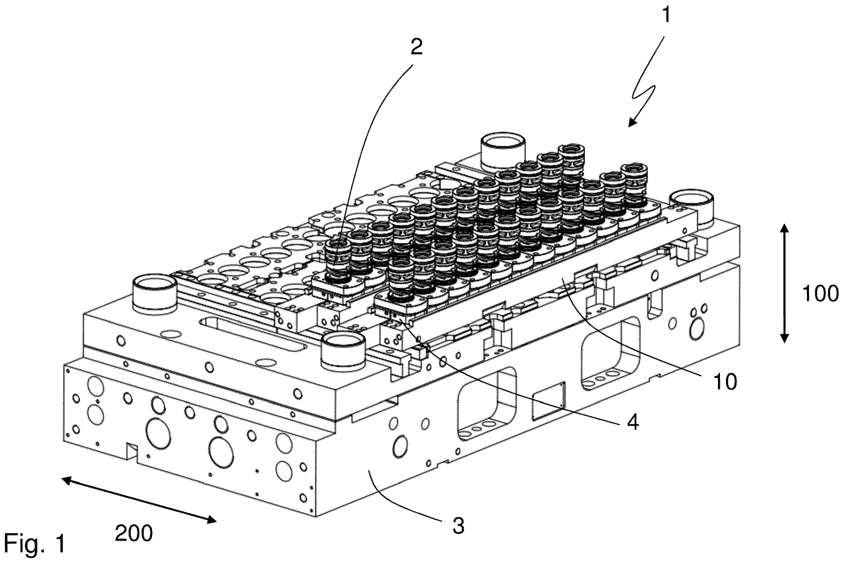

Das in Figur 1 dargestellte Spritzgießwerkzeug 1 umfasst zur Herstellung eines Formteils 8 eine Kavitätenplatte 2 mit einer Mehrzahl von Kavitäten 2a sowie eine Kernplatte 3 mit einer Mehrzahl von Kernen 3a und eine Mehrzahl von Halsringen 4. Die Kavitäten 2a, Kerne 3a und Halsringe 4 sind dabei in Reihen und Spalten auf der Kavitätenplatte 2 bzw. der Kernplatte 3 angeordnet.

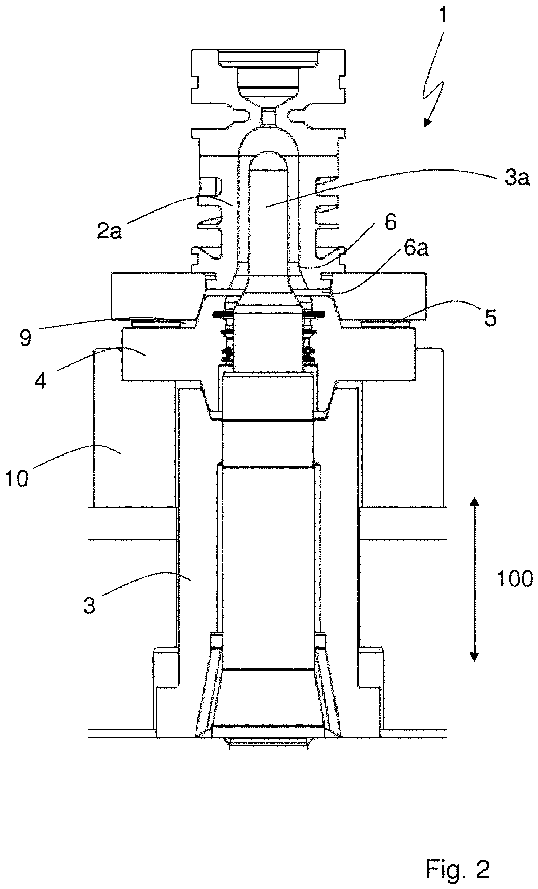

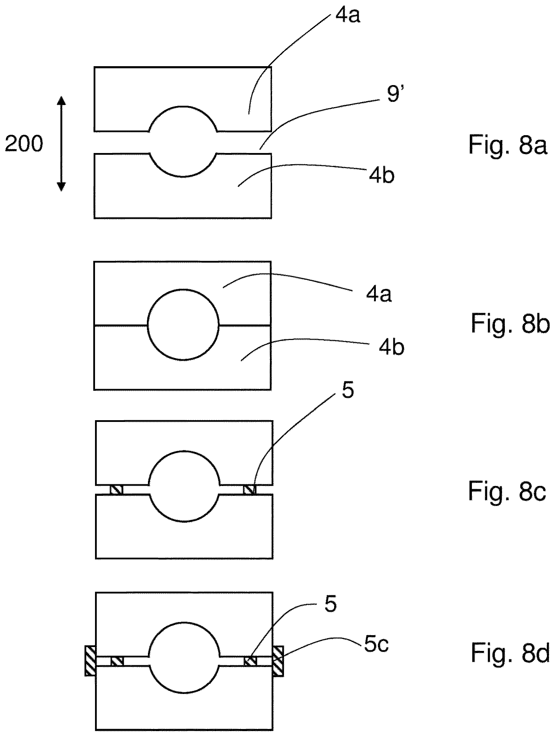

Die Kavitätenplatte 2 und die Kernplatte 3 können entlang der Werkzeugachse 100 relativ zueinander zwischen einer geschlossenen Position, die in den Figuren 1 und 2 dargestellt ist und einer offenen Position hin und her bewegt werden. Des Weiteren weist der jeder Halsring 4 zwei Halsbacken 4a, 4b auf, die entlang einer Richtung 200 auf Schieberleisten 10 hin und her bewegt werden können, um einen abgeschlossenen Formraum 6 (siehe Figur 8b) zu bilden bzw. das Entformen des Formteils 8 zu ermöglichen (siehe Figur 8a).

Wie insbesondere Figur 2 entnommen werden kann, ist in der geschlossenen Position jeweils ein Kern 3a in einer Kavität 2a angeordnet. Der Halsring 4 bzw. die Halsbacken 4a, 4b umschließen in der geschlossenen Position jeweils einen Kern 3a und stellen eine Verbindung zu der Kavität 2a her. Gemeinsam bilden das Halsbackenpaar 4a, 4b, die Kavität 2a und der Kern 3a in der geschlossenen Position einen Formraum 6 zur Aufnahme einer plastifizierten Schmelze. Dabei entspricht eine Innenkontur des Halsbackenpaares 4a, 4b und der Kavität 2a einer Außenkontur des herzustellenden Formteils 8 und eine Außenkontur des Kerns 3a einer Innenkontur des herzustellenden Formteils 8.

Um ein Formteil 8 herzustellen, wird die plastifizierte Schmelze in der beschriebenen Anordnung in den Formraum 6 gepresst. Sobald die Schmelze ausreichend erstarrt ist, wird das Halsbackenpaar 4a, 4b entlang der Richtung 200 auseinander bewegt und der Kern 3a aus der Kavität 2a bewegt, sodass das Formteil 8 entnommen werden kann. Werden mehrere solcher Herstellungszyklen hintereinander durchgeführt, kommt es mit der Zeit zu einer Ansammlung von Schmutzpartikeln insbesondere in dem Spalt 9 zwischen dem Halsring 4 und der Kavitätenplatte 2 sowie dem Spalt 9' zwischen den Halsbacken 4a, 4b des Halsrings 4.

Um eine Reinigung des erfindungsgemäßen Spritzgießwerkzeuges 1 zu ermöglichen, ist daher vorgesehen, dass in einem Reinigungszyklus in einer Reinigungsposition, die entlang der Werkzeugachse 100 betrachtet zwischen der offenen Position und der geschlossenen Position liegt, ein Abstandselement 5 sowohl in einem Spalt 9 zwischen dem Halsring 4 und der Kavität 2a der Kavitätenplatte 2 als auch in einem Spalt 9' zwischen den Halsbacken 4a, 4b des Halsring 4 angeordnet wird.

Durch die Anordnung des Abstandselementes 5 in dem Spritzgießwerkzeug 1 wird eine Aufeinanderzubewegung der Werkzeugelemente Kavitätenplatte 2 mit Kavität 2a, Halsring 4 und Halsbacken 4a, 4b des Halsring 4 über die Reinigungsposition hinaus blockiert. Dadurch entsteht ein erweiterter Formraum 6a, welcher von der Kavität 2a, dem Kern 3a, den Halsbacken 4a, 4b des Halsrings 4 und dem Abstandselement 5 gebildet wird. Wird in diesem erweiterten Formraum 6a plastifizierte Schmelze eingeleitet, wird dadurch sowohl der Spalt 9 zwischen Kavität 2a der Kavitätenplatte 2 und Halsring 4 als auch der Spalt 9' zwischen den Halsbacken 4a, 4b mit der plastifizierten Schmelze gefüllt. Der ursprüngliche Formraum 6 wird überspritzt, sodass auch eine Außenkontur des Halsrings 4 zu der Innenkontur des hergestellten Formteils 8 beiträgt.

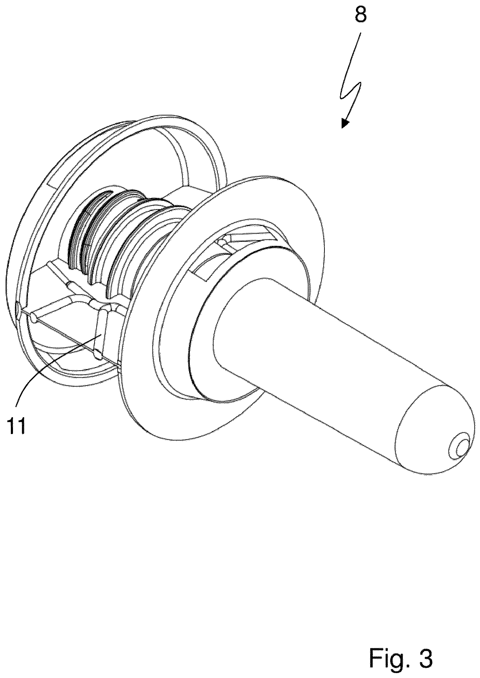

Ein Formteil 8, welches in einem solchen Reinigungszyklus des Spritzgießwerkzeuges 1 hergestellt wurde, ist in Figur 3 dargestellt. Es ist erkenntlich, dass das Formteil 8 neben der Innenkontur der Kavität 2a und der Halsbacken 4a, 4b sowie der Außenkontur des Formkerns 3a noch weitere Abschnitte aufweist, die der Innenkontur der Spalten 9, 9' bzw. der Außenkontur des Halsrings 4 entsprechen. In diesen Spalten 9, 9' sind beispielsweise Entlüftungskanäle 11 vorgesehen, die der Entlüftung des Formraums 6 dienen und in einem normalen Herstellungszyklus nicht mit der plastifizierten Schmelze in Kontakt kommen. Während dem Reinigungszyklus bzw. in der Reinigungsposition des Spritzgießwerkzeuges 1 sind die Spalten 9, 9' jedoch so verbreitert, dass Schmelze eindringen kann und die Kanäle und Spalten so gereinigt werden.

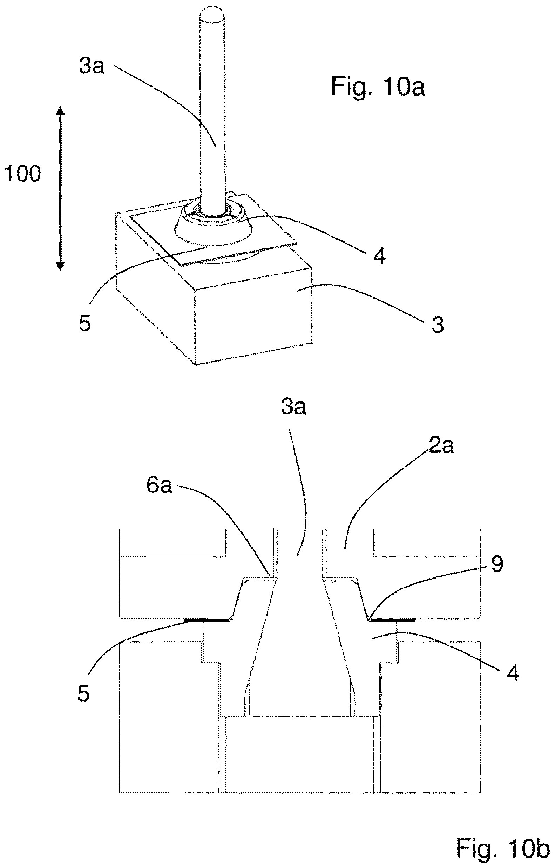

Es versteht sich, dass es sich hierbei um die Beschreibung einer bestimmten Ausführungsform handelt. Wie zuvor ausgeführt, kann das Abstandselement 5 in einer anderen Ausführungsform beispielsweise auch nur zwischen dem Halsring 4 und der Kavität 2a der Kavitätenplatte 2 (siehe beispielsweise Figuren 10a und 10b) oder nur zwischen den Halsbacken 4a, 4b des Halsrings 4 angeordnet sein. Des Weiteren kann das Abstandselement 5 beispielsweise auch zwischen den Schieberleisten 10 angeordnet sind, auf welchen die Halsbacken 4a, 4b angeordnet sind, um diese in der Richtung 200 zu bewegen.

Bei dem erfindungsgemäßen Spritzgießverfahren werden Herstellungszyklen mit Reinigungszyklen abgewechselt, wobei die Anzahl der Herstellungszyklen, nach welcher ein Reinigungszyklus erforderlich ist, insbesondere von dem verarbeiteten Material abhängt.

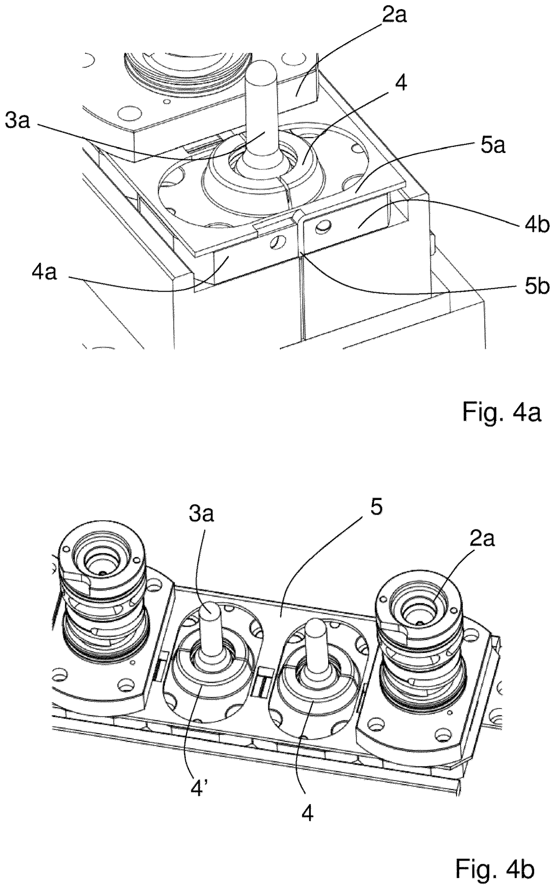

Die detaillierte Ausgestaltung des Abstandselementes 5 sowie dessen Anordnungsoptionen in dem Spritzgießwerkzeug 1 werden nachfolgend vor allem im Hinblick auf die Figuren 4a bis 9 beschrieben.

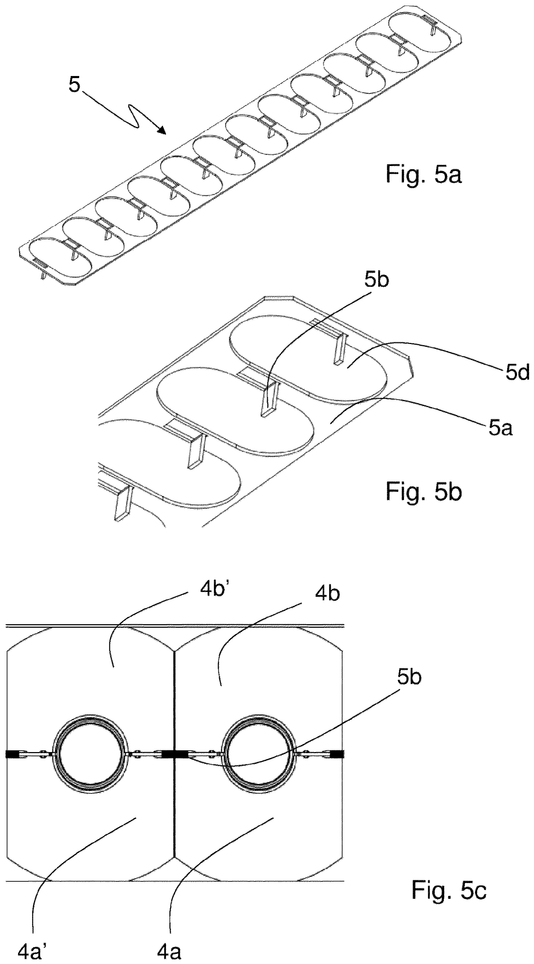

In einer ersten Ausführungsform des Abstandselementes 5, die in den Figuren 5a bis 5c ist das Abstandselement als Stanzbiegeteil derart ausgebildet, dass es einen ersten Abschnitt 5a und einen zweiten Abschnitt 5b aufweist, wobei der zweite Abschnitt 5b durch Umformen des ersten Abschnitts 5a hergestellt ist. Wie insbesondere in Figur 4a ersichtlich, ist der erste Abschnitt 5a des Abstandselementes 5 dabei in der Reinigungsposition zwischen der Kavität 2a der Kavitätenplatte 2 und den Halsbacken 4a, 4b des Halsring 4 angeordnet, während der Abschnitt 5b des Abstandselementes 5 zwischen den Halsbacken 4a, 4b des Halsrings 4 angeordnet ist. Der zweite Abschnitt 5b des Abstandselementes erstreckt sich also im Wesentlichen in Richtung der Werkzeugachse 100 von der Oberfläche des ersten Abschnitts 5a aus in den Spalt 9' zwischen den Halsbacken 4a, 4b.

Das Abstandselement 5 ist in weiter so ausgestaltet, dass es eine Mehrzahl von Öffnungen 5d aufweist, durch welche sich jeweils ein Kern 3a der Kernplatte 3 erstreckt. Dadurch wird das Abstandselement 5 derart in dem Spritzgießwerkzeug 1 angeordnet, dass es sich über mehrere benachbarte Halsringe 4, 4' erstreckt, die in einer Reihe angeordnet sind (siehe z.B. Figur 4b). Wird das Abstandselement 5 für die Reinigung des Spritzgießwerkzeuges 1 z.B. manuell in dem Spritzgießwerkzeug 1 angeordnet, reicht die Anordnung eines Abstandselementes 5 aus, um einen erweiterten Formraum 6a in einer Mehrzahl von Anordnungen aus Kavität 2a, Kern 3a, und Halsbacken 4a, 4b zu bilden.

Wie Figur 5c entnommen werden kann, ist weiter der zweite Abschnitt 5b des Abstandselementes 5 so ausgebildet, dass dieser sich über zwei benachbarte Halsringe 4 erstreckt, sodass er sowohl in Kontakt mit zwei Halsbacken 4a, 4b des einen Halsrings 4 als auch in Kontakt mit den Halsbacken 4a', 4b' des benachbarten Halsrings 4 ist.

Um einen gleichmäßigen Spalt 9' zwischen den Halsbacken 4a, 4b zu erzeugen, weist der erste Abschnitt 5a des Abstandselementes 5 eine Mehrzahl von zweiten Abschnitten 5b auf, sodass jeweils zwei benachbarte zweite Abschnitte 5b in einem ersten Endschnitt 9a' und einem zweiten Endabschnitt 9b' des Spaltes 9` angeordnet sind.

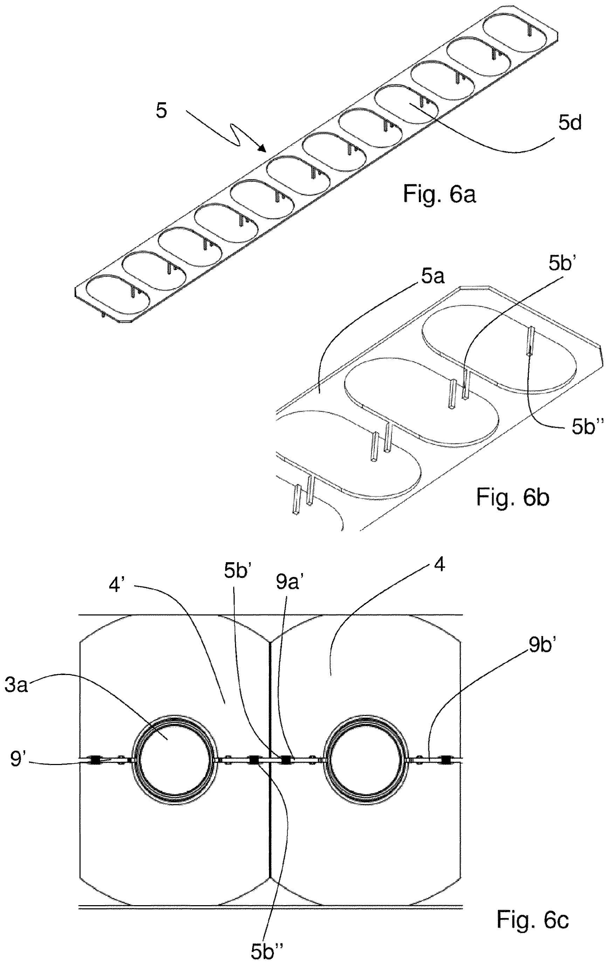

Eine alternative Ausführungsform für das Abstandselement 5 ist in den Figuren 6a bis 6c dargestellt. Diese Ausführungsform des Abstandselementes 5 unterscheidet sich von der in den Figuren 5a bis 5c dargestellten Ausführungsform darin, dass ein einzelner zweiter Abschnitt 5b des Abstandselementes mehrteilig ausgebildet ist. Vergleicht man die Figuren 5c und 6c, so ist ersichtlich, dass sich bei der zweiten Ausführungsform des Abstandselementes 5 jeweils zwei Abschnitte 5b', 5b" des zweiten Abschnitts 5b in den Spalt 9' zwischen den Halsbacken 4a, 4b erstrecken. Ansonsten ist die Ausgestaltung und Anordnung des Abstandselementes 5 identisch zu der zuvor beschriebenen Ausführungsform, wobei die zweiten Abschnitte 5b', 5b" beispielsweise durch Gie-ßen oder Schweißen an dem ersten Abschnitt 5a erzeugt werden können.

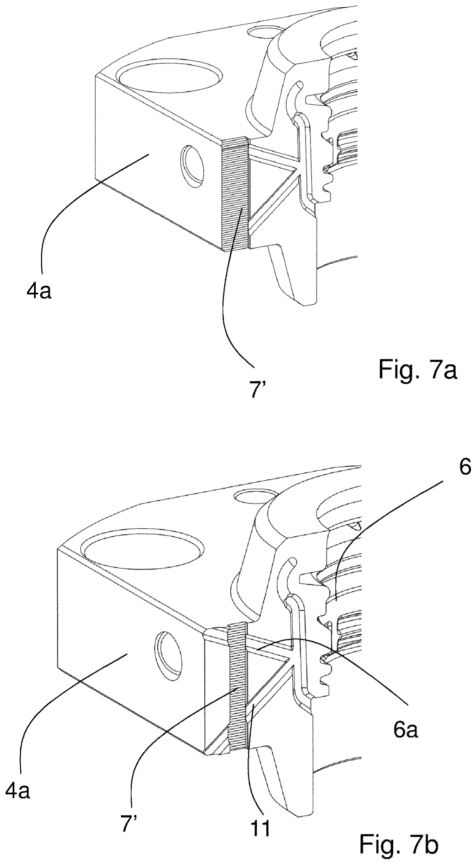

In den Figuren 7a und 7b ist gezeigt, dass die Halsbacken 4a, 4b oder auch nur eine der Halsbacken 4a, 4b eine zu dem zweiten Abschnitt 5b des Abstandselementes 5 korrespondierende Ausnehmung 7' aufweisen können, um die Dichteigenschaften des Abstandselementes 5 zu erhöhen und sicherzustellen, dass keine Schmelze aus dem erweiterten Formraum 6a ausdringen kann. So werden beispielsweise auch die Entlüftungskanäle 11 von dem Abstandselement 5 verschlossen.

Das Abstandselement 5 hat also neben der Blockierfunktion zwischen den Werkzeugelementen 2, 3, 4, 4a, 4b weiter eine Dichtfunktion, um den erweiterten Formraum 6a dicht abzuschließen. Es versteht sich, dass eine Entlüftung des erweiterten Formraums 6a dennoch gewährleistet ist.

Die Dichtfunktion kann entweder durch das gleiche Element 5 erzielt werden, welches auch die Blockierfunktion erzielt (siehe Figur 8c) oder das Abstandselement 5 kann ein zusätzliches Dichtelement 5c aufweisen, welches den Spalt 9' zwischen den Halsbacken 4a, 4b und/oder den Spalt 9 zwischen Kavität 2a der Kavitätenplatte 2 und Halsring 4 abdichtet (siehe Figur 8d).

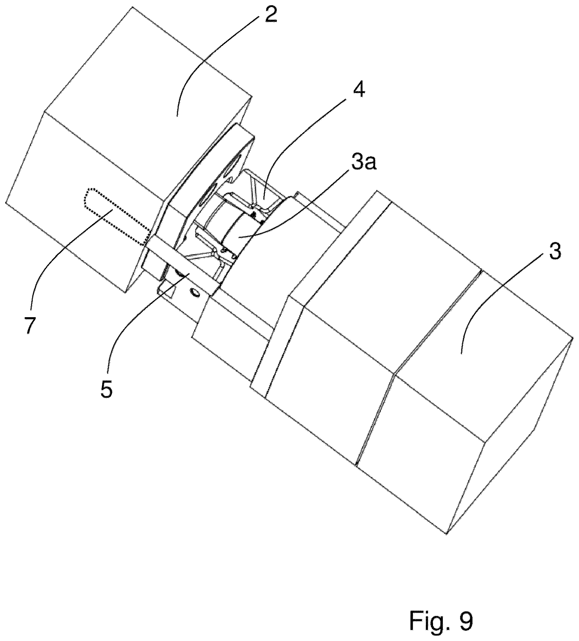

Figur 9 zeigt letztlich eine Alternative zu der manuellen Anordnung des Abstandselementes 5 in dem Spritzgießwerkzeug 1. Bei dieser Ausführungsform weist die Kavitätenplatte 2 eine Ausnehmung 7 auf, in welcher das Abstandselement 5 in der geschlossenen Position von Kavitätenplatte 2, Kernplatte 3 und Halsring 4 vollständig aufgenommen ist, um das normale Herstellungsverfahren des Formteils 8 in dem Formraum 6 nicht zu behindern. Ist eine Reinigung des Spritzgießwerkzeuges 1 erforderlich, kann das Abstandselement 5 aus der Ausnehmung 7 herausgefahren werden und so der erweiterte Formraum 6a gebildet werden. Das Abstandselement 5 wird damit automatisch zwischen den Werkzeugelementen Kavitätenplatte 2, Kernplatte 3 sowie den Halsringen 4a 4b des Halsrings angeordnet. Ein manuelles Anordnen des Abstandselementes 5 entfällt.

Die in den Figuren 10a und 10b gezeigte Ausführungsform des erfindungsgemäßen Spritzgießwerkzeuges 1 unterscheidet sich von den übrigen Ausführungsformen im Wesentlichen darin, dass der Halsring 4 nicht mehrteilig, sondern einteilig ausgestaltet ist. Mit dem Abstandselement 5 wird daher nur ein Spalt 9 zwischen der Kavität 2a der Kavitätenplatte 2 und dem Halsring 4 erzeugt, der Bestandteil des erweiterten Formraums 6a ist.

### Bezugszeichenliste

- 1: Spritzgießwerkzeug
- 2: Kavitätenplatte
- 2a: Kavität
- 3: Kernplatte
- 3a: Kern
- 4, 4': Halsring
- 4a, 4b, 4a', 4b': Halsbacken
- 5: Abstandselement
- 5a: Erster Abschnitt des Abstandselementes
- 5b: Zweiter Abschnitt des Abstandselementes
- 5b': Erster Abschnitt des Abstandselementes
- 5b": Zweiter Abschnitt des Abstandselementes
- 5c: Dichtelement
- 5d: Öffnung
- 6: Formraum
- 6a: erweiterter Formraum
- 7, 7': Ausnehmung
- 8: Formteil
- 9, 9`: Spalt
- 9a': Erster Endabschnitt des Spaltes
- 9b': Zweiter Endabschnitt des Spaltes
- 10: Schieberleisten
- 11: Entlüftungskanal
- 100: Werkzeugachse
- 200: Öffnungsrichtung der Halsbacken

## Patentansprüche

1. Spritzgießwerkzeug (1) zur Herstellung zumindest eines Formteils (8) in einem Formraum (6), wobei das Spritzgießwerkzeug (1) zumindest zwei Werkzeugelemente (2, 3, 4, 4a, 4b) aufweist, die relativ zueinander zwischen einer offenen Position und einer geschlossenen Position bewegbar sind, wobei in der geschlossenen Position von den zumindest zwei Werkzeugelementen (2, 3, 4, 4a, 4b) der Formraum (6) zumindest abschnittsweise umschlossen wird und wobei in der offenen Position ein in dem Formraum (6) hergestelltes Formteil (8) aus dem Spritzgießwerkzeug (1) entnommen werden kann, **dadurch gekennzeichnet, dass** das Spritzgießwerkzeug (1) zumindest ein Abstandselement (5) aufweist, welches derart in dem Spritzgießwerkzeug (1) anordenbar ist, dass eine Bewegung der zumindest zwei Werkzeugelemente (2, 3, 4, 4a, 4b) von der offenen Position in Richtung der geschlossenen Position nur bis zu einer Reinigungsposition, die zwischen der offenen Position und der geschlossenen Position liegt, durch das Abstandselement (5) zugelassen wird und eine weitere Bewegung der zumindest zwei Werkzeugelemente (2, 3, 4, 4a, 4b) in Richtung der geschlossenen Position durch das Abstandselement (5) verhindert wird, wobei in der Reinigungsposition die zumindest zwei Werkzeugelemente (2, 3, 4, 4a, 4b) und das Abstandselement (5) zumindest einen Abschnitt eines erweiterten Formraums (6a) zur Aufnahme einer plastifizierten Schmelze bilden.

2. Spritzgießwerkzeug (1) nach Anspruch 1, wobei das Abstandselement (5) in der Reinigungsposition in einem Spalt (9) zwischen den zwei Werkzeugelementen (2, 3, 4, 4a, 4b) angeordnet ist und/oder wobei das Abstandselement (5) ein Dichtelement (5c) aufweist, welches in der Reinigungsposition in oder an einem Spalt (9, 9') zwischen den zwei Werkzeugelementen (2, 3, 4, 4a, 4b) angeordnet ist.

3. Spritzgießwerkzeug (1) nach einem der vorhergehenden Ansprüche, wobei das Spritzgießwerkzeug (1) als Werkzeugelemente (2, 3, 4, 4a, 4b) eine Kavitätenplatte (2) mit zumindest einer Kavität (2a), eine Kernplatte (3) mit zumindest einem Kern (3a) und zumindest einen Halsring (4) aufweist, wobei der Halsring (4) auf einer Werkzeugachse (100) betrachtet zwischen der Kavitätenplatte (2) und der Kernplatte (3) angeordnet ist, wobei die Kavitätenplatte (2), die Kernplatte (3) und der Halsring (4) derart zueinander beweglich sind, dass in der offenen Position der Kern (3a) nicht in der Kavität (2a) angeordnet ist, sodass das Formteil (6) entnommen werden kann, in der geschlossenen Position der Kern (3a) in der Kavität (2a) angeordnet ist, sodass der Formraum (6) von der Kavität (2a), dem Kern (3a) und dem Halsring (4) gebildet wird und in der Reinigungsposition der Kern (3a) zumindest teilweise in der Kavität (2a) angeordnet ist, sodass der erweiterte Formraum (6a) von der Kavität (2a), dem Kern (3a), dem Halsring (4) und dem Abstandselement (5) gebildet wird.

4. Spritzgießwerkzeug (1) nach Anspruch 3, wobei das Abstandselement (5) mit der Kavitätenplatte (2) oder der Kernplatte (3) derart verbunden und ansteuerbar ist, dass sich das Abstandselement (5) in der Reinigungsposition im Wesentlichen senkrecht von einer Oberfläche der Kavitätenplatte (2) oder der Kernplatte (3) aus in Richtung der Werkzeugachse (100) bis zu dem Halsring (4) oder zwischen Halsbacken (4a, 4b) des Halsrings (4) erstreckt, wobei die Kavitätenplatte (2) oder die Kernplatte (3) vorzugsweise eine Ausnehmung (7) aufweist, in welcher das Abstandselement (5) in der geschlossenen Position des Spritzgießwerkzeuges (1) vollständig aufgenommen ist.

5. Spritzgießwerkzeug (1) nach einem der Ansprüche 3 oder 4, wobei der Halsring (4) eines der zumindest zwei Werkzeugelemente (2, 3, 4, 4a, 4b) ist und die Kavitätenplatte (2) mit der Kavität (2a) oder die Kernplatte (3) mit dem Kern (3a) ein anderes der zumindest zwei Werkzeugelemente (2, 3, 4, 4a, 4b) ist, sodass in der Reinigungsposition durch das Abstandselement (5) ein Spalt (9) zwischen dem Halsring (4) einerseits und der Kavität (2a) oder dem Kern (3a) andererseits gebildet wird, wobei vorzugsweise das Abstandselement (5) eine Öffnung (5d) zum Durchführen des Kerns (3a) aufweist.

6. Spritzgießwerkzeug (1) nach einem der Ansprüche 3 bis 5, wobei der Halsring (4) zwei Halsbacken (4a, 4b) aufweist, wobei eine der Halsbacken (4a) eines der zumindest zwei Werkzeugelemente (2, 3, 4, 4a, 4b) ist und die zweite Halsbacke (4b) ein anderes der zumindest zwei Werkzeugelemente (2, 3, 4, 4a, 4b) ist, sodass in der Reinigungsposition durch das Abstandselement (5) ein Spalt (9') zwischen den zwei Halsbacken (4a, 4b) des Halsrings (4) gebildet wird.

7. Spritzgießwerkzeug (1) nach Anspruch 6 soweit abhängig von den Anspruch 5, wobei das Abstandselement (5) derart ausgebildet ist, dass ein erster Abschnitt (5a) des Abstandselementes (5) in der Reinigungsposition in einem Spalt (9) zwischen dem Halsring (4) einerseits und der Kavität (2a) oder dem Kern (3a) andererseits angeordnet ist und ein zweiter Abschnitt (5b) des Abstandselementes (5) in einem Spalt (9') zwischen den Halsbacken (4a, 4b) des Halsrings (4) angeordnet ist, wobei vorzugsweise der erste und zweite Abschnitt (5a, 5b) des Abstandselementes einstückig ausgestaltet sind, wobei besonders bevorzugt das Abstandselement (5) ein Stift oder ein Stanzbiegeteil ist, wobei, wenn das Abstandselement (5) ein Stanzbiegeteil ist, der zweite Abschnitt (5b) durch Umbiegen aus dem ersten Abschnitt (5a) hergestellt ist.

8. Spritzgießwerkzeug (1) nach Anspruch 6 oder 7, wobei das Abstandselement (5) derart ausgestaltet ist, dass in der Reinigungsposition ein erstes Abstandselement oder ein erster Abschnitt des Abstandselementes (5b') in einem ersten Endabschnitt (9a`) des Spaltes (9') zwischen den Halsbacken (4a, 4b) angeordnet ist und ein zweites Abstandselement oder ein zweiter Abschnitt des Abstandselementes (5b") in einem zweiten Endabschnitt (9b') des Spaltes (9') angeordnet ist, der dem ersten Endabschnitt (9a') gegenüberliegt.

9. Spritzgießwerkzeug (1) nach einem der vorhergehenden Ansprüche soweit abhängig von Anspruch 5, wobei die Kavitätenplatte (2) eine Mehrzahl von Kavitäten (2a) und die Kernplatte (3) eine Mehrzahl von Kernen (3a) aufweist, wobei das Spritzgießwerkzeug (1) weiter eine Mehrzahl von Halsringen (4) aufweist, wobei jeweils ein Halsring 84) einer Kavität (2a) und einem Kern (3a) zugeordnet ist, wobei das Abstandselement (5) derart ausgestaltet und anordenbar ist, dass es sich in der Reinigungsposition über zumindest zwei benachbarte Halsringe (4, 4') erstreckt, wobei vorzugsweise das Abstandselement eine Mehrzahl von Öffnungen (5d) aufweist, durch welche sich die Kerne (3a) der Kernplatte (3) erstrecken.

10. Spritzgießwerkzeug (1) nach einem der vorhergehenden Ansprüche soweit abhängig von Anspruch 6, wobei die Kavitätenplatte (2) eine Mehrzahl von Kavitäten (2a) und die Kernplatte (3) eine Mehrzahl von Kernen (3a) aufweist, wobei das Spritzgießwerkzeug (1) weiter eine Mehrzahl von Halsringen (4, 4') mit jeweils zwei Halsbacken (4a, 4b, 4a', 4b') aufweist, wobei jeweils zwei Halsbacken (4a, 4b, 4a', 4b') eines Halsrings (4, 4') einer Kavität (2a) und einem Kern (3a) zugeordnet sind, wobei das Abstandselement (5) derart ausgestaltet und anordenbar ist, dass es sich in der Reinigungsposition zwischen jeweils zwei Halsbacken (4a, 4b) zweier benachbarter Halsringe (4, 4') erstreckt, sodass das Abstandselement (5) in der Reinigungsposition sowohl in Kontakt mit beiden Halsbacken (4a, 4b) des einen Halsrings (4) als auch in Kontakt mit den beiden Halsbacken (4a', 4b') des benachbarten Halsrings (4') steht.

11. Spritzgießwerkzeug (1) nach einem der vorhergehenden Ansprüche, wobei das Abstandselement (5) derart ausgebildet ist, dass es in der Reinigungsposition durch eine Magnetkraft zwischen den Werkzeugelementen (2, 3, 4, 4a, 4b) gehalten wird.

12. Spritzgießwerkzeug (1) nach einem der vorhergehenden Ansprüche, wobei die Werkzeugelemente (2, 3, 4, 4a, 4b) zumindest eine zu dem Abstandselement (5) korrespondierende Ausnehmung (7') aufweisen, in welcher ein Abschnitt des Abstandselementes (5) in der Reinigungsposition angeordnet ist.

13. Reinigungsverfahren für ein Spritzgießwerkzeug (1) mit den Schritten:
a. Bereitstellen eines Spritzgießwerkzeuges (1) nach einem der Ansprüche 1 bis 12,
b. Anordnen des Abstandselementes (5) zwischen den zumindest zwei Werkzeugelementen (2, 3, 4, 4a, 4b),
c. Bewegen der Werkzeugelemente (2, 3, 4, 4a, 4b) relativ zueinander in eine Reinigungsposition, sodass die Werkzeugelemente (2, 3, 4, 4a, 4b) in Kontakt mit dem Abstandselement (5) gebracht werden, wobei eine Bewegung der Werkzeugelemente (2, 3, 4, 4a, 4b) relativ zueinander über die Reinigungsposition hinaus durch das Abstandselement (5) verhindert wird, wobei die Werkzeugelemente (2, 3, 4, 4a, 4b) und das Abstandselement (5) zumindest einen Abschnitt eines erweiterten Formraum (6a) zur Aufnahme einer plastifizierten Schmelze bilden,
d. Befüllen des erweiterten Formraums (6a) mit der plastifizierten Schmelze,
e. Bewegen der Werkzeugelemente (2, 3, 4, 4a, 4b) in die offene Position, sodass das Formteil (8) aus dem Spritzgießwerkzeug (1) entnommen werden kann.

14. Spritzgießverfahren zur Herstellung eines Formteils (8) mit einem Spritzgießwerkzeug (1) nach einem der Ansprüche 1 bis 12, wobei das Spritzgießverfahren zumindest einen Herstellungszyklus und zumindest einen Reinigungszyklus aufweist, die nacheinander ausgeführt werden, wobei der Reinigungszyklus ein Verfahren nach Anspruch 13 ist, wobei sich der Herstellungszyklus von dem Reinigungszyklus darin unterscheidet, dass kein Abstandselement (5) zwischen den Werkzeugelementen (2, 3, 4, 4a, 4b) angeordnet wird und die Werkzeugelemente (2, 3, 4, 4a, 4b) in Schritt c. in der geschlossenen Position miteinander in Kontakt gebracht werden, sodass zumindest ein Abschnitt des Formraum (6) von den zumindest zwei Werkzeugelementen (2, 3, 4, 4a, 4b) und nicht von dem Abstandselement (5) gebildet wird.
